# EUROPÄISCHE PATENTSCHRIFT

(11) **EP 3 810 486 B1**
(45) Veröffentlichungstag und Bekanntmachung des Hinweises auf die Patenterteilung: **04.05.2022**
(21) Anmeldenummer: 19732582.2
(22) Anmeldetag: 18.06.2019
(51) Int. Cl.: B62D 5/04, H02K 1/00

(54) **KRAFTFAHRZEUGLENKUNG MIT EINEM REDUNDANT AUSGELEGTEN STEUERGERÄT**
MOTOR VEHICLE STEERING SYSTEM WITH A CONTROL UNIT OF REDUNDANT CONFIGURATION
DIRECTION DE VÉHICULE AUTOMOBILE COMPRENANT UN APPAREIL DE COMMANDE À CONFIGURATION REDONDANTE

(30) Priorität: 20.06.2018 DE 102018114828
(43) Veröffentlichungstag der Anmeldung: 28.04.2021
(73) Patentinhaber: thyssenkrupp Presta AG, 9492 Eschen (LI); thyssenkrupp AG, 45143 Essen (DE)
(72) Erfinder: BERES, Adela, 1037 Budapest (HU); HORVATH, Gergely, 6085 Fülöpszállás (HU); FÜZES, Gergely, 1149 Budapest (HU)
(74) Vertreter: thyssenkrupp Intellectual Property GmbH
(86) Internationale Anmeldenummer: PCT/EP2019/065948
(87) Internationale Veröffentlichungsnummer: WO 2019/243294

(56) Entgegenhaltungen:
- EP-A1- 3 082 253
- EP-A1- 3 163 745
- WO-A1-2018/016541
- DE-A1-102012 101 006
- DE-A1-102015 104 850

## Beschreibung

Die vorliegende Erfindung betrifft ein Steuergerät für ein Lenksystem eines Kraftfahrzeugs mit den Merkmalen des Oberbegriffs des Anspruchs 1, einem elektromechanischen Lenksystem und einem Steer-by-Wire-Lenksystem für ein Kraftfahrzeug, sowie einem Verfahren zur Bereitstellung eines Drehmomentes für ein Lenksystem eines Kraftfahrzeuges mit den Merkmalen des Oberbegriffs des Anspruchs 13.

Derzeit verfügbare EPS-Systeme sind "fail-silent" ausgelegt, d. h. bei Erkennung einer Fehlfunktion (entweder im Datenverarbeitungssystem oder der Leistungselektronik) wird die Unterstützung der Servolenkung abgeschaltet, um einen unerwünschten Zustand, wie beispielsweise das Blockieren des Lenkrads, zu vermeiden. Bei Steer-by-Wire Lenkungen ist es ebenfalls bekannt, im Fehlerfall den Lenkaktuator abzuschalten und auf eine Rückfallebene zurückzugreifen. Dieser Ansatz ist für autonomes Fahren nicht geeignet. In einem autonomen Fahrmodus kann das Kraftfahrzeug mit Hilfe verschiedener Sensoren des Fahrerassistenzsystems die Umgebung des Kraftfahrzeugs erfassen und das Kraftfahrzeug durch Vorgabe vorbestimmter Werte vollkommen automatisch steuern. Für autonomes Fahren ist beispielsweise das Qualitätskriterium Automotive Safety Integrity Level (ASIL) vorgeschrieben, das eine bestimmte Ausfallsicherheit bzw. Verfügbarkeit der Lenkung gewährleistet. Um diesen höheren Sicherheitsanforderungen beim autonomen Fahren gerecht zu werden, werden redundante Konzepte vorgeschlagen.

Die Offenlegungsschrift DE 10 2015 104 850 A1 offenbart ein gattungsgemäßes redundantes Konzept mit einem ersten Teilantrieb mit einer ersten Ansteuerelektronik, einem ersten Zwischenkreis, einer ersten Leistungsendstufe und einer ersten Wicklungsgruppe eines Motors und feinem zweiten Teilantrieb mit einer zweiten Ansteuerelektronik, einem zweiten Zwischenkreis, einer zweiten Leistungsendstufe und einer zweiten Wicklungsgruppe des Motors, wobei eine galvanische Trennung zwischen der ersten und zweiten Ansteuerelektronik, dem ersten und zweiten Zwischenkreis, der ersten und zweiten Leistungsendstufe und der ersten und zweiten Wicklungsgruppe vorliegt. Durch eine galvanische Trennung wird eine größtmögliche Unabhängigkeit der einzelnen Antriebe sichergestellt. Hierdurch wird erreicht, dass ein Defekt sich nicht in mehreren Teilantrieben eines redundanten Antriebs ausbreiten kann und somit trotz Redundanz zu einem Totalausfall der Funktionsfähigkeit des elektrischen Lenksystems führt.

Es ist Aufgabe der vorliegenden Erfindung, ein redundantes Steuergerät zur Ansteuerung eines Elektromotors für ein Lenksystem eines Kraftfahrzeugs anzugeben.

Diese Aufgabe wird von einem Steuergerät für ein Lenksystem eines Kraftfahrzeugs mit den Merkmalen des Anspruchs 1, einem elektromechanischen Lenksystem und einem Steer-by-Wire-Lenksystem für ein Kraftfahrzeug, sowie von einem Verfahren zur Bereitstellung eines Drehmomentes für ein Lenksystem eines Kraftfahrzeuges mit den Merkmalen des Anspruchs 13 gelöst. In den Unteransprüchen sind vorteilhafte Weiterbildungen der Erfindung genannt. Demnach ist ein redundantes Steuergerät für einen dreiphasigen Elektromotor eines Lenksystems eines Kraftfahrzeugs aufweisend einen primären Steuerpfad und einen sekundären Steuerpfad vorgesehen, wobei der primäre Steuerpfad eine primäre Recheneinheit und der sekundäre Steuerpfad eine sekundäre Recheneinheit aufweist, und wobei der primäre Steuerpfad mit einer ersten Phasenwindung des Elektromotors und der sekundäre Steuerpfad mit einer zweiten und einer dritten Phasenwindung des Elektromotors zur Ansteuerung des Elektromotors verbunden sind, wobei jeder Phasenwindung ein einzelner Umrichter zugeordnet ist.

Das erfindungsgemäße Steuergerät stellt ein robustes Antriebskonzept dar, da bei einem Fehlerfall in einem der Steuerpfade der fehlerfreie Steuerpfad die Ansteuerung der zugeordneten Phasenwindungen vornimmt und somit mindestens ein Drittel des maximal zur Verfügung stehenden Motordrehmomentes zur Verfügung steht, das ausreicht um ein Sicherheitslenkmanöver vorzunehmen.

Bevorzugt ist die primäre Recheneinheit dazu eingerichtet, anhand des vom Fahrer in das Lenkrad eingebrachten Drehmoments und weiteren Eingangsgrößen ein Motor-Soll-Drehmoment zu berechnen und mittels einer primären Motorreglung anhand des Motor-Soll-Drehmomentes primäre Motorströme zum Betreiben der ersten Phasenwindung zu bestimmten und diese an den primären Umrichter weiterzugeben.

Es ist auch bevorzugt, wenn die sekundäre Recheneinheit dazu eingerichtet ist, anhand des vom Fahrer in das Lenkrad eingebrachten Drehmoments und weiteren Eingangsgrößen ein Motor-Soll-Drehmoment zu berechnen und mittels einer sekundären Motorreglung anhand des Motor-Soll-Drehmomentes sekundäre Motorströme zum Betreiben der zweiten und dritten Phasenwindung zu bestimmten und diese an zwei sekundäre Umrichter weiterzugeben.

Dabei umfassen die weiteren Eingangsgrößen bevorzugt wenigstens eine von folgenden Größen: Fahrzeuggeschwindigkeit, mittels eines Rotorlagesensors gemessene momentane Rotorposition, gemessenen Stromwerte in den Phasenwicklungen.

In einer bevorzugten Ausführungsform stehen die Signale der primären und sekundären Rotorlagesensoren und/oder der primären und sekundären Drehmomentsensoreinheiten jeweils sowohl der primären Recheneinheit als auch der sekundären Recheneinheit zur Verfügung. Dadurch kann die Redundanz erhöht werden.

Weiterhin kann es vorteilhaft sein, wenn der primäre Steuerpfad an einen primären Kraftfahrzeug-Bus angeschlossen ist und der sekundäre Steuerpfad an einen vom primären Kraftfahrzeug-Bus getrennten sekundären Kraftfahrzeug-Bus angeschlossen ist. Auch dadurch wird die Redundanz der Steuerpfade weiter erhöht.

Vorzugsweise weisen der primäre Steuerpfad und der sekundäre Steuerpfad jeweils eine externe Stromversorgung zur Erhöhung der Redundanz auf.

Es ist bevorzugt vorgesehen, dass die primäre und sekundäre Recheneinheit ein MCU ist.

in einer vorteilhaften Ausführungsform ist die sekundäre Recheneinheit als Hauptrecheneinheit ausgebildet, die im fehlerfreien Zustand des Steuergerätes dazu eingerichtet ist, die Motor-Soll-Drehmomente und deren Verteilung auf die drei Umrichter zur Ansteuerung der drei Phasenwicklungen zu berechnen. Dies hat den Vorteil, dass dadurch die primäre Recheneinheit kleiner und somit kostengünstiger ausgestaltet sein kann.

Es kann ein Schalter vorgesehen sein, der zwischen der primären Recheneinheit und einem der sekundären Umrichter angeordnet ist und der derart ausgestaltet ist, im Fehlerfall des sekundären Steuerpfades die primäre Recheneinheit mit dem sekundären Umrichter zu verbinden. Die Leistung des Elektromotors kann dadurch im Fehlerfall erhöht werden.

Weiterhin ist ein elektromechanisches Lenksystem für ein Kraftfahrzeug vorgesehen, aufweisend
- ein mit einer unteren Lenkwelle verbundenes Lenkritzel, welches mit einer in einem Gehäuse entlang einer Längsachse verschieblich gelagerten Zahnstange zur Lenkung von Rädern in Eingriff steht,
- einen dreiphasigen Elektromotor zur Lenkkraftunterstützung,
- zwei Drehmomentsensoren, die zwischen einer mit dem Lenkrad verbundenen oberen Lenkwelle und der unteren Lenkwelle angeordnet ist und ein vom Fahrer eingebrachtes Drehmoment erfassen, und
- eine elektronische Steuereinheit zur Berechnung der Lenkkraftunterstützung durch den dreiphasigen Elektromotor, die ein zuvor beschriebenes redundantes Steuergerät umfasst.

Zudem ist ein Steer-by-Wire-Lenksystem für Kraftfahrzeuge mit einem auf die gelenkten Räder wirkenden, in Abhängigkeit von einem Fahrerlenkwunsch elektronisch geregelten Lenksteller, der mittels eines Lenkgetriebes auf die gelenkten Räder wirkt, und mit einem Rückwirkungen der Straße auf ein Lenkrad übertragenden Feedback-Aktuator, vorgesehen, wobei der Lenksteller ein zuvor beschriebenes redundantes Steuergerät umfasst.

Auch ist ein Verfahren zur Bereitstellung eines Drehmomentes für ein Lenksystem eines Kraftfahrzeuges aufweisend einen dreiphasigen Elektromotor und eine elektronische Steuereinheit zur Berechnung des vom Elektromotor aufzubringenden Drehmomentes vorgesehen, wobei die elektronische Steuereinheit ein redundantes Steuergerät mit einem primären Steuerpfad und einem sekundären Steuerpfad umfasst, und der primäre Steuerpfad eine primäre Recheneinheit und der sekundäre Steuerpfad eine sekundäre Recheneinheit aufweist, und der primäre Steuerpfad mit einer ersten Phasenwindung des Elektromotors und der sekundäre Steuerpfad mit einer zweiten und einer dritten Phasenwindung zur Ansteuerung des Elektromotors verbunden sind, wobei jeder Phasenwindung ein einzelner Umrichter zugeordnet ist, und das Verfahren folgende Schritte aufweist:
- Berechnen der Motor-Soll-Drehmomente zur Ansteuerung aller drei Phasenwindungen in der sekundären Recheneinheit,
- Weitergabe der Motor-Soll-Drehmomente an eine primäre Motorregelung der primären Recheneinheit,
- Bestimmen von primären Motorströmen zum Betreiben der ersten Phasenwindung in der primären Motorreglung,
- Bestimmen von sekundären Motorströmen zum Betreiben der zweiten und dritten Phasenwindung in einer sekundären Motorreglung der sekundären Recheneinheit,
- Detektieren eines Fehlerzustandes in einem der Steuerpfade,
- Abschalten der Lenkkraftunterstützung des fehlerbehafteten Steuerpfades.

Vorzugsweise weist das Verfahren folgende weitere Schritte auf:
- Detektieren eines Fehlers in dem sekundären Steuerpfad,
- Berechnen des Motor-Soll-Drehmoments zur Ansteuerung der primären Phasenwindungen in der primären Recheneinheit.

Bevorzugt berechnet die sekundäre Recheneinheit anhand des vom Fahrer in das Lenkrad eingebrachten Drehmoments und weiteren Eingangsgrößen die Motor-Soll-Drehmomente.

Die weiteren Eingangsgrößen umfassen dabei vorzugsweise wenigstens eine von folgenden Größen: Fahrzeuggeschwindigkeit, mittels eines Rotorlagesensors gemessene momentane Rotorposition, gemessenen Stromwerte in den Phasenwicklungen.

Zur Erhöhung der Redundanz stehen die Signale der primären und sekundären Rotorlagesensoren und/oder der primären und sekundären Drehmomentsensoreinheiten bevorzugt jeweils sowohl der primären Recheneinheit als auch der sekundären Recheneinheit zur Verfügung.

Vorzugsweise empfängt der primäre Steuerpfad Daten von einem primären Kraftfahrzeug-Bus und der sekundäre Steuerpfad Daten von einem vom primären Kraftfahrzeug-Bus getrennten sekundären Kraftfahrzeug-Bus, um die Redundanz der beiden Pfade zu erhöhen.

Es kann ebenfalls vorgesehen sein, dass der primäre Steuerpfad und der sekundäre Steuerpfad jeweils an eine externe Stromversorgung angeschlossen sind.

Vorzugsweise ist die primäre und sekundäre Recheneinheit ein MCU.

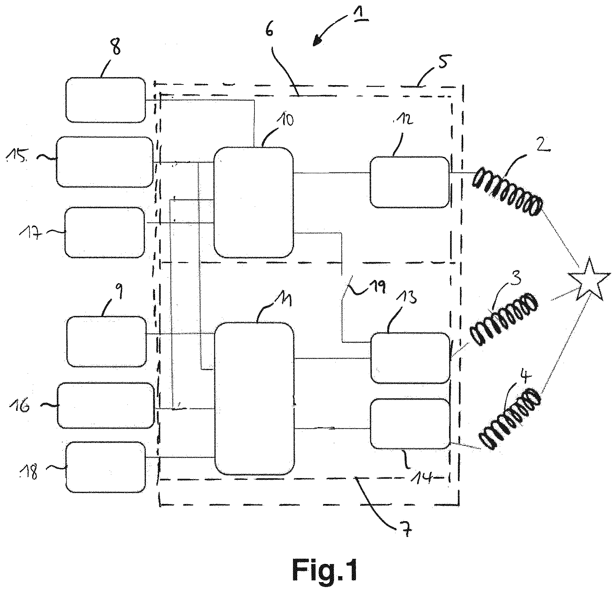

Nachfolgend wird ein Ausführungsbeispiel der vorliegenden Erfindung anhand der Zeichnung beschrieben. Figur 1 zeigt ein schematisches Blockdiagramm eines Elektromotors 1 einer Kraftfahrzeuglenkung. Der Elektromotor 1 weist drei Phasenwindungen 2,3,4 und einen Permanentmagnet-Rotor auf. Die Phasenwindungen 2,3,4 des Elektromotors werden von einer Steuereinheit angesteuert. Die Steuereinheit umfasst ein Steuergerät 5 (ECU). Das Steuergerät 5 ist redundant ausgelegt und weist einen primären Steuerpfad 6 und einen sekundären Steuerpfad 7 auf. Der primäre Steuerpfad 6 und der sekundäre Steuerpfad 7 weisen bevorzugt jeweils eine Stromversorgung 8,9 eine Recheneinheit 10,11, wenigstens einen Umrichter 12,13,14 und die notwendigen Sensoren 15,16 (Drehmoment, Phasenstrom und Rotorlage) auf. Dabei sind die Module des primären Steuerpfades 6 im Folgenden als "primäre" Module und die Module des sekundären Steuerpfades 7 als "sekundäre" Module benannt. Unter den Begrifflichkeiten "primär" und "sekundär" ist nicht zwangsläufig zu verstehen, dass es eine Gewichtung zwischen den Modulen gibt. Die Module können sowohl gleich als auch unterschiedlich ausgebildet sein.

Der primären Steuerpfad 6 bestromt eine einzelne Phasenwindung 2 und der sekundäre Steuerpfad 7 zwei der drei Phasenwindungen 3,4. Es sind im ganzen drei Umrichter 12,13,14 vorgesehen, die jeweils eine der drei Phasenwindungen 2,3,4 erregen und entsprechend ihrer Zuordnung zu den Phasen von der primären Recheneinheit 10 oder sekundären Recheneinheit 11 angesteuert werden. Die Spannungsumrichter 12,13,14 haben bevorzugt jeweils einen Gleichspannungs-Zwischenkreis, in dem zur Stabilisierung der Gleichspannung jeweils ein Zwischenkreiskondensator vorgesehen ist, um gemeinsam verursachte Ausfälle z. B. durch Kurzschluss eines Kondensators zu vermeiden.

Jeder Steuerpfad 6,7 weist die externe Stromversorgung 8,9, vorzugsweise eine Batterie, auf. Die primäre und sekundäre Recheneinheit 10,11 ist bevorzugt ein Mikrokontroller (MCU). Die primäre und sekundäre Recheneinheit 10,11 empfängt das vom Fahrer in das Lenkrad eingebrachte Drehmoment, das jeweils von einer zugeordneten primären und einer sekundären Drehmomentsensoreinheit 15,16 gemessen wurde. Weiterhin sind die primäre und sekundäre Recheneinheit 10,11 jeweils an einen separaten Kraftfahrzeug-Bus 17,18 angeschlossen, über den die Recheneinheit 10,11 Datensignale empfängt. Die primäre und sekundäre Recheneinheit 10,11 berechnet anhand des vom Fahrer in das Lenkrad eingebrachten Drehmoments 15,16 und weiteren Eingangsgrößen, wie zum Beispiel die über den jeweiligen Kraftfahrzeug-Bus 17,18 gesendete Fahrzeuggeschwindigkeit v und Messsignale vom Elektromotor, wie beispielsweise der mittels des primären und sekundären Rotorlagesensors 15,16 gemessenen momentanen Rotorposition und/oder gemessene Stromwerte in den Phasenwicklungen, das jeweilige Motor-Soll-Drehmoment. Das Motor-Soll-Drehmoment wird dabei mittels eines Algorithmus berechnet, der beispielsweise eine sogenannte boost curve oder einen Lenksäulendrehmomentsteuerungsalgorithmus (engl. column torque control algorithms) umfasst. Das primäre Motor-Soll-Drehmoment wird an eine primäre Motorregelung der primären Recheneinheit 10 weitergegeben, die daraus die primären Motorströme mittels PWM bestimmt. Das sekundäre Motor-Soll-Drehmoment wird entsprechend an eine sekundäre Motorregelung der sekundären Recheneinheit 11 weitergegeben, die daraus die sekundären Motorströme mittels Pulsweitenmodulation (PWM) bestimmt. Dem primären Steuerpfad 6 ist ein primärer Umrichter 12 zugeordnet, der mittels der primären Motorströme pulsweitenmoduliert angesteuert wird. Der sekundäre Steuerpfad 7 weist hingegen zwei sekundäre Umrichter 13,14 auf, die jeweils mittels der sekundären Motorströme pulsweitenmoduliert angesteuert werden. Die Umrichter 12,13,14 bestehen im Allgemeinen aus halbleiterbasierten Schaltern, die in der erforderlichen Topologie verschaltet sind. Die am häufigsten eingesetzten elektronischen Schalter sind Bipolartransistoren mit isolierter Steuerelektrode (engl. Insulated Gate Bipolar Transistor (IGBT)) oder Metall-Oxid-Halbleiter-Feldeffekttransistoren (engl. Metal Oxide Semiconductor Field Effect Transistor (MOSFET)). Diese Halbleiterschalter werden über sogenannte Gate-Treiber (engl. Gate-Driver Units (GDU)) angesteuert. Da die Umrichter 12,13,14 jeweils einer Phasenwindungen des Elektromotors 2,3,4 zugeordnet sind, wird eine erste Phasenwindungen 2 mit dem primären Motorstrom mittels des primären Umrichters 12 und die zweite und dritte Phasenwindungen 3,4 jeweils mit dem sekundären Motorstrom mittels dem entsprechenden sekundären Umrichter 13,14 bestromt, woraus ein gemeinsames Drehmoment des Elektromotors resultiert. Dieses Drehmoment steht dem Fahrer in elektromechanischen Lenkungen als Lenkunterstützung oder zum Lenken in Steer-by-Wire Lenkungen zur Verfügung.

Die Signale der primären und sekundären Rotorlagesensoren 15,16 und der primären und sekundären Drehmomentsensoreinheiten 15,16 stehen jeweils sowohl der primären als auch sekundären Recheneinheit 10,11 zur Verfügung.

Die Signale der beiden primären und entsprechend der beiden sekundären Sensoren 15,16 werden zur Verbesserung der Sicherheit verglichen und auf Fehler in dem Sensorpaar 15,16 hin überprüft. Das Ergebnis des Vergleichs kann dann noch mittels des jeweils anderen Sensorpaars 15,16 abgeglichen werden. Falls eine kritische Abweichung der gemessenen Signale erkannt wird, wird der Signaleingang des fehlerhaften Sensorpaares 15,16 verworfen und die Signale des fehlerfreien Sensorpaares 15,16 dienen ausschließlich als Eingangssignal für die beiden Recheneinheiten 10,11.

Zur Erhöhung der Sensorgenauigkeit kann im fehlerfreien Zustand der Mittelwert der gemessenen Sensorwerte zur Verwendung in der primären und sekundären Recheneinheiten 10,11 berechnet werden.

Da beide Sensorpaare 15,16 jeweils mit der primären als auch sekundären Recheneinheit 10,11 verbunden sind, steht auch im Fehlerfall eines der Sensorpaare 15,16 für die Steuereinheit zur Verfügung, wobei mittels des fehlerfreien Sensorpaars 15,16 100% der Nennleistung des Elektromotors erreicht werden können.

Beide Steuerpfade 6,7 sind jeweils als "fail-silent" ausgelegt, d. h. jeder Steuerpfad kann eine eigene Fehlfunktion oder einen Fehlzustand feststellen und die Drehmomenterzeugung durch die entsprechende(n) Phasenwindung(en) abschalten. Dies wird typischerweise durch Kombination eines ASIL-D-Mikrocontrollers mit verschiedenen Plausibilitätsprüfungen und einer Hardwarearchitektur erreicht, die in der Lage ist, die Phasenwindungen im Falle eines Fehlers (z. B. durch Phasenrelais) von dem Steuergerät zu trennen.

Die beiden Steuerpfade 6,7 sind so ausgestaltet, dass die beiden Steuerpfade 6,7 zumindest soweit voneinander unabhängig sind, dass ein Fehler in einer Hardwarekomponente eines Steuerpfades nicht zu einer Fehlerkaskade in einer Hardwarekomponente in dem anderen Steuerpfad führt, wobei die Trennung der beiden Steuerpfade beispielsweise durch festzugeordnete Stromleitungen und Masseleitungen, Isolation von Steuerpfaden und dergleichen erfolgen kann. Die Software der Steuerpfade ist jeweils so ausgelegt, dass sie sowohl Fehler in der Hardware als auch in der Software selbst innerhalb eines Steuerpfades erkennt und eine Unterbrechung oder Abschaltung des fehlerhaften Pfades herbeiführt. Für diesen Fall ist die Software so programmiert, dass der fehlerfreie Steuerpfad ein Drehmoment bereitstellen kann.

In einer bevorzugten Ausführungsform ist vorgesehen, dass die sekundäre Recheneinheit 11 als Hauptrecheneinheit fungiert und im fehlerfreien Zustand die Motor-Soll-Drehmomente und deren Verteilung auf die drei Umrichter 12,13,14 zur Ansteuerung der drei Phasenwicklungen 2,3,4 berechnet. Die Verteilung erfolgt entsprechend der durch die Umrichter 12,13,14 zur Verfügung stehenden Kapazitäten, die beispielsweise abhängig sind von der Temperatur. Die sekundäre Recheneinheit 11 steuert bevorzugt zwei Umrichter 13,14 an und die primäre Recheneinheit 10 einen einzigen Umrichter 12.

Da die Steuerpfade 6,7 redundant ausgelegt sind, kann das Steuergerät auch bei einer Fehlfunktion eines der Hardwarekomponenten ein Drehmoment bereitstellen.

In dem Fall, dass die primäre Recheneinheit 10 ausfällt, stehen zwei Drittel des nominalen Drehmoments zur Verfügung. Kommt es hingegen zu einem Fehler in dem primären Steuerpfad 6, der nicht erkannt wird, kann bis zu einem Drittel des maximalen Drehmoments als passives Sperrmoment vorhanden sein, das dem von den beiden fehlerfrei funktionierenden Umrichtern 13,14 erzeugten Drehmoment entgegenwirkt, so dass insgesamt mindestens ein Drittel des nominalen Drehmomentes zur Verfügung steht. Fehler in dem primären Steuerpfad 6 werden daher als Mehrfachfehler (engl. multiple points faults) gewertet, da es nur durch einen zusätzlichen Fehler zu einem gefährlichen Ausfall des Steuergerätes kommen kann.

Kommt es zu einem Fehler in dem sekundären Steuerpfad 7, muss dieser hingegen detektiert werden, denn der sekundäre Steuerpfad 7 übernimmt zum einen die Berechnung der Motor-Soll-Drehmomente und deren Verteilung auf die Phasenwindungen und zum anderen stellt der sekundäre Steuerpfad 7 zwei Drittel des Drehmomentes bereit. Wird ein solcher Fehler erkannt, übernimmt die primäre Recheneinheit 10 die Berechnung des Motorstroms für den primären Umrichter 12 zur Ansteuerung der entsprechenden Phasenwindung 2 mit einem Drittel des maximal zur Verfügung stehenden Motordrehmomentes.

Für den Fall, dass ein Drittel des Drehmomentes nicht zum Erreichen eines benötigten Drehmomentes ausreicht, ist vorzugsweise ein Schalter 19 vorgesehen, der zwischen der primären Recheneinheit 10 und einem der sekundären Umrichter 13 angeordnet ist und somit einen der sekundären Umrichter 13 der primären Recheneinheit 10 im Fehlerfall zuordnet. Dieser sekundäre Umrichter 13 kann dann von der primären Recheneinheit 10 bei einem Fehler im sekundären Steuerpfad 7 angesteuert werden, damit die dem Umrichter 13 zugeordnete Phasenwindung 3 bestromt werden kann, so dass auch in diesem Fehlerfall zwei Drittel des nominalen Drehmomentes zur Verfügung stehen.

Die Architektur des Steuergerätes 5 ist so aufgebaut, dass ein erster Fehler nicht zum Ausfall der Lenkung und zu einer Gefährdung des Fahrers führt. Dieser erste Fehler muss aber in der Sicherheitsanalyse betrachtet werden. Auftretende Fehler werden daher ausgelesen und deren Vorliegen an das Fahrzeug weitergegeben und/oder dem Fahrer signalisiert, so dass ein Notfall-Manöver eingeleitet werden kann. Zwar ist das Fahrzeug nach dem ersten Fehler in dem Steuergerät 5 weiterhin steuerbar, aber ein weiterer Fehler würde schwerwiegende Folgen haben. Daher darf ein erster Fehler nicht als latent eingestuft werden.

Es wird eine quantitative induktive Sicherheitsanalyse in Form einer FMEDA (Failure Mode Effect and Diagnostic Analysis) erstellt, mit der das Sicherheitskonzept eines Fahrzeugsystems bewertbar und vergleichbar wird. Als Ergebnisse einer FMEDA sind Kennzahlen zum Diagonosedeckungsgrad (Diagnose Coverage DC), zum Anteil sicherer Fehler (Safe Failure Fraction SFF), zu Hardwarearchitekturmetriken (Single-Point Fault Metric SPFM, Latent Fault Metric LFM) und zur Fehlerwahrscheinlichkeit, dass ein Sicherheitsziel verletzt wird (Probabilistic Metric for random Hardware Failure PMHF) angegeben.

Für den Fall, dass die Leistung des Elektromotors richtig ausgelegt ist und die Systemannahmen stimmen, können so alle Fehler im Elektromotor als Mehrfachfehler eingestuft werden, wodurch ein höheres Sicherheitslevel erreicht wird.

Die beiden externen Stromversorgungen sind bevorzugt unabhängig voneinander und versorgen jeweils ein Sensorpaar und eine entsprechende Recheneinheit mit Strom. Um einen gemeinsamen Ausfall (Kurzschluss) auf der Seite des Aktuators zu vermeiden, ist der primäre Umrichter 12 an die primäre Stromversorgung 8 angeschlossen und die sekundären Umrichter 13,14 sind an die sekundäre Stromversorgung 9 angeschlossen. In dem Fall das eine Stromversorgung 8,9 fehlerbehaftet ist, steht der durch die andere Stromversorgung 8,9 bestromte Teil des Aktuators zur Drehmomenterzeugung zur Verfügung, d. h. im schlimmsten Fall stehen nur ein Drittel der maximalen Motorleistung zur Verfügung. Falls das nicht ausreichend ist, kann in einem zusätzlichen Schaltkreis ein Schalter vorgesehen sein, der einen der zwei Umrichter des sekundären Steuerpfades 13,14 mit der primären Stromversorgung 8 im Fehlerfall des sekundären Steuerpfades 7 verbindet, analog zu dem oben beschriebenen zusätzlichen Schalter 19 zum Verbinden der primären Recheneinheit 10 mit einem der sekundären Umrichter 13.

Das beschriebene Steuergerät ist auch in einer Lenkung eines vollkommen autonom fahrenden Kraftfahrzeuges ohne Lenkmittel einsetzbar. In diesem Fall fließen jedoch nicht am Lenkrad gemessene Drehmomente in die Recheneinheiten 10,11 zur Berechnung der jeweiligen Motor-Soll-Drehmomente ein. Die Motor-Soll-Drehmomente werden anhand von über den Kraftfahrzeug-Bus 17,18 empfangenen Signale mit vorgegebenen Schnittstellenspezifikationen, z. B. Soll-Lenkwinkel, Getriebebewegung, Ritzelwinkel, Soll-Drehmoment, Soll-Fahrzeugtrajektorie in relativen oder absoluten Fahrzeugkoordinaten, bestimmt. Es sind dabei bevorzugt zwei unabhängige Kommunikationskanäle für den Regelkreis des Steuergerätes vorgesehen, die jeweils einer Recheneinheit zugeordnet sind und die die notwendigen Kontrollsignale übermitteln. In dem Fall das einer der Kommunikationskanäle einen Fehler aufweist, wird der entsprechende Steuerpfad abgeschaltet und der fehlerfreie Steuerpfad steuert den Motor mit einem reduzierten maximal möglichen Motordrehmoment an.

Die allgemein beschriebene redundante Architektur des Steuergerätes erzielt eine Ausfallrate, die kleiner ist als 10 FIT (Failure in Time). Die Ausfallrate ist eine Kenngröße der Zuverlässigkeit des Hardwareelements. Sie gibt in diesem Fall an, dass durchschnittlich weniger als 10 Steuergeräte in 10⁹ Betriebsstunden ausfallen. Das erfindungsgemäße Steuergerät ist daher insbesondere für Fahrmodi SAE L3-L5, bei dem das System die Umgebung kontrolliert und eine bedingte bis vollständige ausgebildete Automation vorliegt, geeignet.

## Patentansprüche

1. Redundantes Steuergerät (5) für einen dreiphasigen Elektromotor (1) eines Lenksystems eines Kraftfahrzeugs aufweisend einen primären Steuerpfad (6) und einen sekundären Steuerpfad (7), wobei der primäre Steuerpfad (6) eine primäre Recheneinheit (10) und der sekundäre Steuerpfad (7) eine sekundäre Recheneinheit (11) aufweist, **dadurch gekennzeichnet, dass** der primäre Steuerpfad (6) mit einer ersten Phasenwindung des Elektromotors (2) und der sekundäre Steuerpfad (7) mit einer zweiten und einer dritten Phasenwindung des Elektromotors (3,4) zur Ansteuerung des Elektromotors verbunden sind, wobei jeder Phasenwindung (2,3,4) ein einzelner Umrichter (12,13,14) zugeordnet ist.

2. Redundantes Steuergerät nach Anspruch 1, **dadurch gekennzeichnet, dass** die primäre Recheneinheit (10) dazu eingerichtet ist, anhand des vom Fahrer in das Lenkrad eingebrachten Drehmoments (15) und weiteren Eingangsgrößen das Motor-Soll-Drehmoment zu berechnen und mittels einer primären Motorreglung anhand des Motor-Soll-Drehmomentes primäre Motorströme zum Betreiben der ersten Phasenwindung (2) zu bestimmten und diese an den primären Umrichter (12) weiterzugeben.

3. Redundantes Steuergerät nach einem der vorhergehenden Ansprüche, **dadurch gekennzeichnet, dass** die sekundäre Recheneinheit (11) dazu eingerichtet ist, anhand des vom Fahrer in das Lenkrad eingebrachten Drehmoments (16) und weiteren Eingangsgrößen das Motor-Soll-Drehmoment zu berechnen und mittels einer sekundären Motorreglung anhand des Motor-Soll-Drehmomentes sekundäre Motorströme zum Betreiben der zweiten und dritten Phasenwindung (3,4) zu bestimmten und diese an zwei sekundäre Umrichter (13,14) weiterzugeben.

4. Redundantes Steuergerät nach Anspruch 2 oder 3, **dadurch gekennzeichnet, dass** die weiteren Eingangsgrößen wenigstens eine von folgenden Größen umfasst: Fahrzeuggeschwindigkeit (v), mittels eines Rotorlagesensors (15,16) gemessene momentane Rotorposition, gemessenen Stromwerte in den Phasenwicklungen.

5. Redundantes Steuergerät nach Anspruch 4, **dadurch gekennzeichnet, dass** die Signale der primären und sekundären Rotorlagesensoren (15,16) und/oder der primären und sekundären Drehmomentsensoreinheiten (15,16) jeweils sowohl der primären Recheneinheit (10) als auch der sekundären Recheneinheit (11) zur Verfügung stehen.

6. Redundantes Steuergerät nach einem der vorhergehenden Ansprüche, **dadurch gekennzeichnet, dass** der primäre Steuerpfad (6) an einen primären Kraftfahrzeug-Bus (17) angeschlossen ist und der sekundäre Steuerpfad (7) an einen vom primären Kraftfahrzeug-Bus (17) getrennten sekundären Kraftfahrzeug-Bus (18) angeschlossen ist.

7. Redundantes Steuergerät nach einem der vorhergehenden Ansprüche, **dadurch gekennzeichnet, dass** der primäre Steuerpfad (6) und der sekundäre Steuerpfad (7) jeweils eine externe Stromversorgung (8,9) aufweisen.

8. Redundantes Steuergerät nach einem der vorhergehenden Ansprüche, **dadurch gekennzeichnet, dass** die primäre und sekundäre Recheneinheit (10,11) ein MCU ist.

9. Redundantes Steuergerät nach einem der vorhergehenden Ansprüche, **dadurch gekennzeichnet, dass** die sekundäre Recheneinheit (11) als Hauptrecheneinheit ausgebildet ist und im fehlerfreien Zustand des Steuergerätes (5) dazu eingerichtet ist, die Motor-Soll-Drehmomente und deren Verteilung auf die drei Umrichter (12,13,14) zur Ansteuerung der drei Phasenwindungen (2,3,4) zu berechnen.

10. Redundantes Steuergerät nach einem der vorhergehenden Ansprüche, **dadurch gekennzeichnet, dass** ein Schalter (19) vorgesehen ist, der zwischen der primären Recheneinheit (10) und einem der sekundären Umrichter (13,14) angeordnet ist und der derart ausgestaltet ist, im Fehlerfall des sekundären Steuerpfades die primäre Recheneinheit (10) mit dem sekundären Umrichter (13,14) zu verbinden.

11. Elektromechanisches Lenksystem für ein Kraftfahrzeug aufweisend
• ein mit einer unteren Lenkwelle verbundenes Lenkritzel, welches mit einer in einem Gehäuse entlang einer Längsachse verschieblich gelagerten Zahnstange zur Lenkung von Rädern in Eingriff steht,
• einen dreiphasigen Elektromotor zur Lenkkraftunterstützung,
• zwei Drehmomentsensoren (15,16), die zwischen einer mit dem Lenkrad verbundenen oberen Lenkwelle und der unteren Lenkwelle angeordnet ist und ein vom Fahrer eingebrachtes Drehmoment erfassen, und
• eine elektronische Steuereinheit zur Berechnung der Lenkkraftunterstützung, die ein redundantes Steuergerät (5) nach einem der vorhergehenden Ansprüche umfasst.

12. Steer-by-Wire-Lenksystem für Kraftfahrzeuge mit einem auf die gelenkten Räder wirkenden, in Abhängigkeit von einem Fahrerlenkwunsch elektronisch geregelten Lenksteller, der mittels eines Lenkgetriebes auf die gelenkten Räder wirkt, mit einem Rückwirkungen der Straße auf ein Lenkrad übertragenden Feedback-Aktuator, wobei der Lenksteller ein redundantes Steuergerät (5) nach einem der vorhergehenden Ansprüche 1 bis 10 umfasst.

13. Verfahren zur Bereitstellung eines Drehmomentes für ein Lenksystem eines Kraftfahrzeuges aufweisend einen dreiphasigen Elektromotoren und eine elektronische Steuereinheit zur Berechnung des vom Elektromotor aufzubringenden Drehmomentes, wobei die elektronische Steuereinheit ein redundantes Steuergerät (5) mit einem primären Steuerpfad (6) und einem sekundären Steuerpfad (7) umfasst, **dadurch gekennzeichnet, dass** der primäre Steuerpfad (6) eine primäre Recheneinheit (10) und der sekundäre Steuerpfad (7) eine sekundäre Recheneinheit (11) aufweist, und der primäre Steuerpfad (6) mit einer ersten Phasenwindung des Elektromotors (2) und der sekundäre Steuerpfad (7) mit einer zweiten und einer dritten Phasenwindung des Elektromotors (3,4) zur Ansteuerung des Elektromotors verbunden sind, wobei jeder Phasenwindung (2,3,4) ein einzelner Umrichter (12,13,14) zugeordnet ist, und das Verfahren folgende Schritte aufweist:
• Berechnen der Motor-Soll-Drehmomente zur Ansteuerung aller drei Phasenwindungen (2,3,4) in der sekundären Recheneinheit (11),
• Weitergabe der Motor-Soll-Drehmomente an eine primäre Motorregelung der primären Recheneinheit (10),
• Bestimmen von primären Motorströmen zum Betreiben der ersten Phasenwindung (12) in der primären Motorreglung,
• Bestimmen von sekundären Motorströmen zum Betreiben der zweiten und dritten Phasenwindung (13,14) in einer sekundären Motorreglung der sekundären Recheneinheit (11),
• Detektieren eines Fehlerzustandes in einem der Steuerpfade (6,7),
• Abschalten der Lenkkraftunterstützung des fehlerbehafteten Steuerpfades (6,7).

14. Verfahren nach Anspruch 13, **dadurch gekennzeichnet, dass** das Verfahren folgende weitere Schritte aufweist:
• Detektieren eines Fehlers in dem sekundären Steuerpfad (7),
• Berechnen des Motor-Soll-Drehmoments zur Ansteuerung der primären Phasenwindungen in der primären Recheneinheit (11).

15. Verfahren nach Anspruch 13 oder 14, **dadurch gekennzeichnet, dass** die sekundäre Recheneinheit (11) anhand des vom Fahrer in das Lenkrad eingebrachten Drehmoments (16) und weiteren Eingangsgrößen die Motor-Soll-Drehmomente berechnet.

16. Verfahren nach Anspruch 15, **dadurch gekennzeichnet, dass** die weiteren Eingangsgrößen wenigstens eine von folgenden Größen umfasst: Fahrzeuggeschwindigkeit (v), mittels eines Rotorlagesensors (15,16) gemessene momentane Rotorposition, gemessenen Stromwerte in den Phasenwicklungen.

17. Verfahren nach Anspruch 16, **dadurch gekennzeichnet, dass** die Signale der primären und sekundären Rotorlagesensoren (15,16) und/oder der primären und sekundären Drehmomentsensoreinheiten (15,16) jeweils sowohl der primären Recheneinheit (10) als auch der sekundären Recheneinheit (11) zur Verfügung stehen.

18. Verfahren nach einem der vorhergehenden Ansprüche 13 bis 17, **dadurch gekennzeichnet, dass** der primäre Steuerpfad (6) Daten von einem primären Kraftfahrzeug-Bus (17) empfängt und der sekundäre Steuerpfad (7) Daten von einem vom primären Kraftfahrzeug-Bus (17) getrennten sekundären Kraftfahrzeug-Bus (18) empfängt.

19. Verfahren nach einem der vorhergehenden Ansprüche 13 bis 18, **dadurch gekennzeichnet, dass** der primäre Steuerpfad (6) und der sekundäre Steuerpfad (7) jeweils an eine externe Stromversorgung (8,9) angeschlossen sind.

20. Verfahren nach einem der vorhergehenden Ansprüche 13 bis 19, **dadurch gekennzeichnet, dass** die primäre und sekundäre Recheneinheit (10,11) ein MCU ist.

## Claims

1. A redundant control device (5) for a three-phase electric motor (1) of a steering system of a motor vehicle, having a primary control path (6) and a secondary control path (7), wherein the primary control path (6) has a primary processing unit (10), and the secondary control path (7) has a secondary processing unit (11), **characterized in that** the primary control path (6) is connected to a first phase winding of the electric motor (2), and the secondary control path (7) is connected to a second and a third phase winding of the electric motor (3,4) for actuating the electric motor, wherein each phase winding (2,3,4) is assigned an individual converter (12,13,14).

2. The redundant control device as claimed in claim 1, **characterized in that** the primary processing unit (10) is configured to calculate the setpoint motor torque on the basis of the torque (15) input into the steering wheel by the driver and further input variables, and to determine, by means of a primary motor regulating means on the basis of the setpoint motor torque, primary motor currents for operating the first phase winding (2) and to pass them on to the primary converter (12).

3. The redundant control device as claimed in one of the preceding claims, **characterized in that** the secondary processing unit (11) is configured to calculate the setpoint motor torque on the basis of the torque (16) input into the steering wheel by the driver and further input variables, and to determine, by means of a secondary motor regulating means on the basis of the setpoint motor torque, secondary motor currents for operating the second and third phase windings (3,4) and to pass them on to two secondary converters (13,14).

4. The redundant control device as claimed in claim 2 or 3, **characterized in that** the further input variables comprise at least one of the following variables: vehicle velocity (v), instantaneous rotor position measured by means of a rotor position sensor (15,16), and measured current values in the phase windings.

5. The redundant control device as claimed in claim 4, **characterized in that** the signals of the primary and secondary rotor position sensors (15,16) and/or the primary and secondary torque sensor units (15,16) are respectively made available both to the primary processing unit (10) and to the secondary processing unit (11).

6. The redundant control device as claimed in one of the preceding claims, **characterized in that** the primary control path (6) is connected to a primary motor vehicle bus (17), and the secondary control path (7) is connected to a secondary motor vehicle bus (18) which is separate from the primary motor vehicle bus (17).

7. The redundant control device as claimed in one of the preceding claims, **characterized in that** the primary control path (6) and the secondary control path (7) each have an external power supply (8,9).

8. The redundant control device as claimed in one of the preceding claims, **characterized in that** the primary and secondary processing unit (10,11) is an MCU.

9. The redundant control device as claimed in one of the preceding claims, **characterized in that** the secondary processing unit (11) is embodied as a main processing unit, and in the fault-free state of the control device (5) is configured to calculate the setpoint motor torques and their distribution along the three converters (12,13,14) in order to actuate the three phase windings (2,3,4).

10. The redundant control device as claimed in one of the preceding claims, **characterized in that** a switch (19) is provided which is arranged between the primary processing unit (10) and one of the secondary converters (13,14) and which is configured to connect the primary processing unit (10) to the secondary converter (13,14) in the event of a fault in the secondary control path.

11. An electromechanical steering system for a motor vehicle having
• a steering pinion which is connected to a lower steering shaft and is in engagement with a toothed rack, mounted so as to be displaceable along a longitudinal axis in a housing, in order to steer wheels,
• a three-phase electric motor for providing power steering,
• two torque sensors (15,16) which are arranged between an upper steering shaft, connected to the steering wheel, and the lower steering shaft, and which sense a torque input by the driver, and
• an electronic control unit for calculating the power steering assistance, which comprises a redundant control device (5) as claimed in one of the preceding claims.

12. A steer-by-wire steering system for motor vehicles having a steering actuator which works on the steered wheels, is electronically regulated as a function of the driver's steering request and acts on the steered wheels by means of a steering gear, having a feedback actuator which transmits reactions of the road to a steering wheel, wherein the steering actuator comprises a redundant control device (5) as claimed in one of the preceding claims 1 to 10.

13. A method for providing a torque for a steering system of a motor vehicle, having a three-phase electric motor and an electronic control unit for calculating the torque which is to be applied by the electric motor, wherein the electronic control unit comprises a redundant control device (5) with a primary control path (6) and a secondary control path (7), **characterized in that** the primary control path (6) has a primary processing unit (10), and the secondary control path (7) has a secondary processing unit (11), and the primary control path (6) is connected to a first phase winding of the electric motor (2), and the secondary control path (7) is connected to a second and a third phase winding of the electric motor (3,4) for actuating the electric motor, wherein each phase winding (2,3,4) is assigned an individual converter (12,13,14), and the method has the following steps:
• calculating the setpoint motor torques for actuating all the three phase windings (2,3,4) in the secondary processing unit (11),
• passing on the setpoint motor torques to a primary motor regulating means of the primary processing unit (10),
• determining primary motor currents for operating the first phase winding (12) in the primary motor regulating means,
• determining secondary motor currents for operating the second and third phase windings (13,14) in a secondary motor regulating means of the secondary processing unit (11),
• detecting a fault state in one of the control paths (6,7), and
• switching off the power steering assistance of the faulty control path (6,7).

14. The method as claimed in claim 13, **characterized in that** the method has the following further steps:
• detecting a fault in the secondary control path (7),
• calculating the setpoint motor torque for actuating the primary phase windings in the primary processing unit (11).

15. The method as claimed in claim 13 or 14, **characterized in that** the secondary processing unit (11) calculates the setpoint motor torques on the basis of the torque (16) input into the steering wheel by the driver and further input variables.

16. The method as claimed in claim 15, **characterized in that** the further input variables comprises at least one of the following variables: vehicle velocity (v), instantaneous rotor position measured by means of a rotor position sensor (15,16), measured current values in the phase windings.

17. The method as claimed in claim 16, **characterized in that** the signals of the primary and secondary rotor position sensors (15,16) and/or of the primary and secondary torque sensor units (15,16) are each available both to the primary processing unit (10) and to the secondary processing unit (11).

18. The method as claimed in one of the preceding claims 13 to 17, **characterized in that** the primary control path (6) receives data from a primary motor vehicle bus (17), and the secondary control path (7) receives data from a secondary motor vehicle bus (18) which is separate from the primary motor vehicle bus (17).

19. The method as claimed in one of the preceding claims 13 to 18, **characterized in that** the primary control path (6) and the secondary control path (7) are each connected to an external power supply (8,9).

20. The method as claimed in one of the preceding claims 13 to 19, **characterized in that** the primary and secondary processing unit (10,11) is an MCU.

## Revendications

1. Appareil de commande redondant (5) pour un moteur électrique triphasé (1) d'un système de direction d'un véhicule automobile, présentant un chemin de commande primaire (6) et un chemin de commande secondaire (7), le chemin de commande primaire (6) présentant une unité de calcul primaire (10) et le chemin de commande secondaire (7) présentant une unité de calcul secondaire (11), **caractérisé en ce que** le chemin de commande primaire (6) est relié à un premier enroulement de phase du moteur électrique (2) et le chemin de commande secondaire (7) est relié à un deuxième et à un troisième enroulement de phase du moteur électrique (3, 4) pour piloter le moteur électrique, un convertisseur individuel (12, 13, 14) étant associé à chaque enroulement de phase (2, 3, 4).

2. Appareil de commande redondant selon la revendication 1, **caractérisé en ce que** l'unité de calcul primaire (10) est conçue pour calculer le couple théorique du moteur à l'aide du couple (15) appliqué au volant par le conducteur et d'autres grandeurs d'entrée, et pour déterminer au moyen d'une régulation de moteur primaire à l'aide du couple théorique du moteur des courants de moteur primaires pour faire fonctionner le premier enroulement de phase (2) et pour les retransmettre au convertisseur primaire (12).

3. Appareil de commande redondant selon l'une quelconque des revendications précédentes, **caractérisé en ce que** l'unité de calcul secondaire (11) est conçue pour calculer le couple théorique du moteur à l'aide du couple (16) appliqué au volant par le conducteur et d'autres grandeurs d'entrée, et pour déterminer au moyen d'une régulation de moteur secondaire à l'aide du couple théorique du moteur des courants de moteur secondaires pour faire fonctionner le deuxième et le troisième enroulement de phase (3, 4) et pour les retransmettre à deux convertisseurs secondaires (13, 14).

4. Appareil de commande redondant selon la revendication 2 ou 3, **caractérisé en ce que** les autres grandeurs d'entrée comprennent au moins l'une des grandeurs suivantes : la vitesse de véhicule (v), une position de rotor momentanée mesurée au moyen d'un capteur de position de rotor (15, 16), des valeurs de courant mesurées dans les enroulements de phase.

5. Appareil de commande redondant selon la revendication 4, **caractérisé en ce que** les signaux des capteurs de position de rotor primaire et secondaire (15, 16) et/ou des unités de capteur de couple primaire et secondaire (15, 16) sont disponibles respectivement à la fois pour l'unité de calcul primaire (10) et l'unité de calcul secondaire (11).

6. Appareil de commande redondant selon l'une quelconque des revendications précédentes, **caractérisé en ce que** le chemin de commande primaire (6) est connecté à un bus de véhicule automobile primaire (17), et le chemin de commande secondaire (7) est connecté à un bus de véhicule automobile secondaire (18) séparé du bus de véhicule automobile primaire (17).

7. Appareil de commande redondant selon l'une quelconque des revendications précédentes, **caractérisé en ce que** le chemin de commande primaire (6) et le chemin de commande secondaire (7) présentent respectivement une alimentation électrique externe (8, 9).

8. Appareil de commande redondant selon l'une quelconque des revendications précédentes, **caractérisé en ce que** les unités de calcul primaire et secondaire (10, 11) sont des MCU.

9. Appareil de commande redondant selon l'une quelconque des revendications précédentes, **caractérisé en ce que** l'unité de calcul secondaire (11) est réalisée sous forme d'unité de calcul principale et est conçue à l'état sans défaut de l'appareil de commande (5) pour calculer les couples théoriques du moteur et leur répartition sur les trois convertisseurs (12, 13, 14) pour piloter les trois enroulements de phase (2, 3, 4).

10. Appareil de commande redondant selon l'une quelconque des revendications précédentes, **caractérisé en ce qu'**un commutateur (19) est prévu qui est disposé entre l'unité de calcul primaire (10) et le convertisseur secondaire (13, 14) et qui est configuré en cas de défaut du chemin de commande secondaire pour relier l'unité de calcul primaire (10) au convertisseur secondaire (13, 14) .

11. Système de direction électromécanique pour un véhicule automobile, présentant
• un pignon de direction relié à un arbre de direction inférieur et qui est en prise avec une crémaillère montée mobile le long d'un axe longitudinal dans un carter pour diriger des roues,
• un moteur électrique triphasé pour l'assistance de direction,
• deux capteurs de couple (15, 16) qui sont disposés entre un arbre de direction supérieur relié au volant et un arbre de direction inférieur et détectent un couple appliqué par le conducteur, et
• une unité de commande électronique pour calculer l'assistance de direction qui comprend un appareil de commande redondant (5) selon l'une quelconque des revendications précédentes.

12. Système de direction à commande par câble pour véhicules automobiles, comprenant un régulateur de direction agissant sur les roues directrices, régulé électroniquement en fonction d'un souhait de direction du conducteur, et qui agit sur les roues directrices au moyen d'un mécanisme de direction, comprenant un actionneur à rétroaction transmettant à un volant des rétroactions provenant de la route, le régulateur de direction comprenant un appareil de commande redondant (5) selon l'une quelconque des revendications précédentes 1 à 10.

13. Procédé de fourniture d'un couple pour un système de direction d'un véhicule automobile, présentant un moteur électrique triphasé et une unité de commande électronique pour calculer le couple à produire par le moteur électrique, l'unité de commande électronique comprenant un appareil de commande (5) redondant ayant un chemin de commande primaire (6) et un chemin de commande secondaire (7), **caractérisé en ce que** le chemin de commande primaire (6) présente une unité de calcul primaire (10) et le chemin de commande secondaire (7) présente une unité de calcul secondaire (11), et le chemin de commande primaire (6) est relié à un premier enroulement de phase du moteur électrique (2) et le chemin de commande secondaire (7) est relié à un deuxième et à un troisième enroulement de phase du moteur électrique (3, 4) pour piloter le moteur électrique, un convertisseur individuel (12, 13, 14) étant associé à chaque enroulement de phase (2, 3, 4), et le procédé présentant les étapes suivantes consistant à :
• calculer les couples théoriques du moteur pour piloter l'ensemble des trois enroulements de phase (2, 3, 4) dans l'unité de calcul secondaire (11),
• retransmettre les couples théoriques du moteur à une régulation de moteur primaire de l'unité de calcul primaire (10),
• déterminer des courants de moteur primaires pour faire fonctionner le premier enroulement de phase (12) dans la régulation de moteur primaire,
• déterminer des courants de moteur secondaires pour faire fonctionner le deuxième et le troisième enroulement de phase (13, 14) dans une deuxième régulation de moteur secondaire de l'unité de calcul secondaire (11),
• détecter un état de défaut sur l'un des chemins de commande (6, 7),
• désactiver l'assistance de direction du chemin de commande défectueux (6, 7).

14. Procédé selon la revendication 13, **caractérisé en ce que** le procédé présente les étapes supplémentaires suivantes consistant à :
• détecter un défaut sur le chemin de commande (7) secondaire,
• calculer le couple théorique du moteur pour piloter les enroulements de phase primaires dans l'unité de calcul primaire (11).

15. Procédé selon la revendication 13 ou 14, **caractérisé en ce que** l'unité de calcul secondaire (11) calcule les couples théoriques du moteur à l'aide du couple (16) appliqué au volant par le conducteur et d'autres grandeurs d'entrée.

16. Procédé selon la revendication 15, **caractérisé en ce que** les autres grandeurs d'entrée comprennent au moins l'une des grandeurs suivantes : la vitesse de véhicule (v), une position de rotor momentanée mesurée au moyen d'un capteur de position de rotor (15, 16), des valeurs de courant mesurées dans les enroulements de phase.

17. Procédé selon la revendication 16, **caractérisé en ce que** les signaux des capteurs de position de rotor primaire et secondaire (15, 16) et/ou des unités de capteur de couple primaire et secondaire (15, 16) sont disponibles respectivement à la fois pour l'unité de calcul primaire (10) et pour l'unité de calcul secondaire (11) .

18. Procédé selon l'une quelconque des revendications précédentes 13 à 17, **caractérisé en ce que** le chemin de commande primaire (6) reçoit des données d'un bus de véhicule automobile primaire (17) et le chemin de commande secondaire (7) reçoit des données d'un bus de véhicule automobile secondaire (18) séparé du bus de véhicule automobile primaire (17).

19. Procédé selon l'une quelconque des revendications précédentes 13 à 18, **caractérisé en ce que** le chemin de commande primaire (6) et le chemin de commande secondaire (7) sont connectés respectivement à une alimentation électrique externe (8, 9).

20. Procédé selon l'une quelconque des revendications précédentes 13 à 19, **caractérisé en ce que** les unités de calcul primaire et secondaire (10, 11) sont des MCU.
